# EUROPEAN PATENT SPECIFICATION

(11) **EP 0 700 978 B1**
(45) Date of publication and mention of the grant of the patent: **21.01.1998**
(21) Application number: 95110165.8
(22) Date of filing: 29.06.1995
(51) Int. Cl.: C09J 153/02

(54) **Hot melt adhesive compositions**
Heissschmelzklebstoffzusammensetzungen
Compositions adhésives thermofusibles

(30) Priority: 18.08.1994 JP 194118/94
(43) Date of publication of application: 13.03.1996
(73) Proprietor: National Starch and Chemical Investment Holding Corporation, Wilmington, Delaware 19809 (US)
(72) Inventor: Sugie, Masaharu, Miyakojima, Osaka-shi, Osaka 534 (JP)
(74) Representative: Hagemann, Heinrich, Dr.rer.nat., Dipl.-Chem.

(56) References cited:
- EP-A- 0 171 225
- DATABASE WPI Section Ch, Week 8339 Derwent Publications Ltd., London, GB; Class C08, AN 83-774228 'hot melt adhesive composition block copolymer mixture...' & JP-A-58 141 269 (ASAHI CHEMICAL IND. K.K.) , 22 August 1983
- DATABASE WPI Section Ch, Week 8544 Derwent Publications Ltd., London, GB; Class A81, AN 85-273788 'hot melt adhesive...' & JP-A-60 186 577 (JAPAN SYNTHETIC RUBBER) , 24 September 1985
- DATABASE WPI Section Ch, Week 8601 Derwent Publications Ltd., London, GB; Class A12, AN 86-003075 'aromatic vinyl conjugated diene block copolymer used as hot melt adhesive' & JP-A-60 228 521 (JAPAN SYNTHETIC RUBBER) , 13 November 1985

## Description

### [Technical field]

The present invention relates to a hot melt adhesive composition useful in various fields such as disposable products, paper packaging/convertings and construction/interior materials.

### [Prior art]

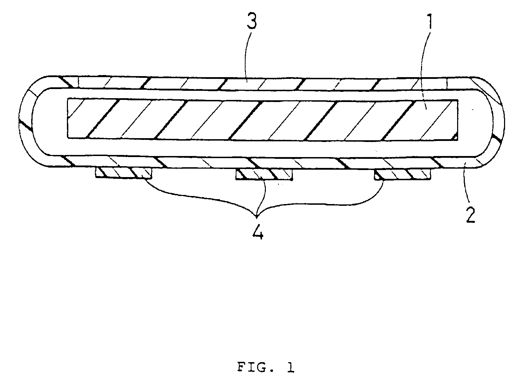

Generally, a disposable products such as disposable diapers and sanitary napkins has a structure shown in Figure 1. A leak-prevention film 2 is provided to surround an absorbent panel 1. A liquid-permeable sheet is designated by 3.

On the leak-prevention film 2, a hot melt adhesive layer 4 for the purpose of prevention of moving is suitably provided. The leak-prevention film 2 has conventionally been formed from a polyethylene film which is not air permeable.

Recently, for the purpose of providing more comfortable use for consumers, such as prevention of steamy feel or rash on the skin as well as soft textures, air-permeable polyethylene films are becoming to be used. Such air-permeable polyethylene films generally have ventilation pores which are formed by addition of a filler such as calcium carbonate to polyethylene and subsequent extrusion followed by orientation whereby delaminating the interface between calcium carbonate and polyethylene. However, the ventilation pores cause the disadvantage that the heat-shrink occurs upon heating the air-permeable polyethylene and wrinkles are formed, resulting in a poor appearance of a product. Accordingly, in an attempt to prevent the wrinkles, it is proposed to add a plasticizer such as polybutene and castor oil to the materials for the molding of the polyethylene film.

However, when the hot melt adhesive layer 4 is formed on the air-permeable polyethylene film obtained with the added plasticizer as described above, the plasticizer migrates gradually into the hot melt adhesive layer 4 as the time elapses, causing significant reduction in the cohesive strength of the hot melt adhesive 3, resulting in a disadvantage of significant reduction in the adhesive strength to the film. Thus, for the purpose of avoiding such disadvantage, a hot melt adhesive which is capable of ensuring the adhesive strength at a level of causing no practical problems is selected and applied to the air-permeable polyethylene film containing a plasticizer. Nevertheless, the time course reduction in the adhesive strength when stored for a long period can not be avoided, and no satisfactory hot melt adhesives have not been developed.

### [Objective of the invention]

An objective of the present invention is to provide a hot melt adhesive composition which does not undergo time course reduction in the adhesive strength to an air-permeable film containing a plasticizer and which is highly resistant to plasticizers.

### [Detailed description of the invention]

Accordingly, a hot melt adhesive composition according to the present invention comprises as major components:
(a) a synthetic rubber which is a block copolymer represented by the general formula (1):

   A-B-A (1)

   wherein A denotes polystyrene and B denotes a styrene-butadiene random copolymer, and in which the content of styrene in moiety B in the above formula (1) is 1 to 30% by weight based on the entire block copolymer;
(b) a tackifying resin; and,
(c) a plasticizing oil.

Thus, we made much effort in a series of studies to develop a hot melt adhesive whose adhesive strength when applied to an air-permeable polyethylene film containing a plasticizer is not reduced even after stored for a long time. As a result, it is found that the resistance against a plasticizer is improved and our objective can be achieved by using a synthetic rubber which is represented by the general formula (1) shown above and which consists of a block copolymer comprising a styrene-butadiene random copolymer as moiety B in the general formula (1). As discussed herein, the expression "comprising as major components" is used to intend to include a rubber consisting only of such major components.

The present invention is further detailed below.

The hot melt adhesive composition according to the present invention can be obtained specifically by using a synthetic rubber (component a), tackifying resin (component b) and plasticizing oil (component c).

The synthetic rubber (component a) is a block copolymer represented by the general formula (1) shown below:

A-B-A (1)

wherein A denotes polystyrene and B denotes a styrene-butadiene random copolymer.

In the block copolymer (component a), the content of styrene in moiety B in the general formula (1) should be 1 to 30% by weight based on the entire block copolymer (hereinafter indicated merely as %). Particularly, the content is 1 to 20%. Thus, a content of styrene in moiety B less than 1% provides no improvement in resistance against plasticizers, while that exceeding 30% causes significant reduction in adhesion. It is further preferable that the content of styrene in moieties A and B in the general formula (1) is 10 to 50% based on the entire block copolymer (component a). Thus, a content of styrene less than 10% based on the entire component a causes reduction in cohesive strength, while that exceeding 50% causes reduction in adhesive strength.

It is particularly preferable that moiety B (styrene-butadiene random copolymer) in the general formula (1) in the block copolymer as component a is hydrogenated to further improve the heat resistance of the hot melt adhesive composition in addition to the resistance against plasticizers.

As the tackifying resin (component b) used together with component a, any of those employed conventionally may be employed. For example, coumarone-indene resins, phenol-formaldehyde resins, modified xylene resins, terpene-phenol resins, terpene resins, hydrogenerated terpene resins, polybutene, polyisobutylene, petroleum resins, hydrogenated petroleum resins, hydrogenated rosins, hydrogenated rosin esters, styrene resins and the like may be employed independently or in combination.

The placticizing oil (component c) employed together with components a and b may also be any of those used conventionally. For example, paraffin-based oils, naphthene-based oils and oils containing aromatic components in large amounts may be employed independently or in combination.

In addition to components a to c discussed above, the hot melt adhesive composition according to the present invention may contain various additives if desired such as hindered phenol stabilizers for the purpose of improvement in resistance against heat, oxidation and lights as well as ultraviolet absorbers.

The hot melt adhesive composition according to the present invention may be prepared by a method described below as an example. Thus, components a to c and other additives if desired in suitable amounts are admixed and melted while heating.

The admixture may preferably contain, based on the entire hot melt adhesive composition, component a in an amount from 5 to 50%, component b in an amount from 30 to 70%, and component c in an amount from 50% or less. When component a is contained in an amount departing from the range specified above, the adhesion capability is reduced significantly and the melt index becomes high, resulting in difficulty in painting. When component b is contained in an amount departing from the range specified above, the adhesion strength at a room temperature is reduced and the texture becomes hard. When component c is contained in an amount departing from the range specified above, the cohesive strength is reduced significantly and the leak from the air-permeable film becomes excess.

As described above, the inventive hot melt adhesive composition comprises a base polymer which is a synthetic rubber (component a) consisting of a block copolymer represented by the general formula (1) shown above, in which moiety B is a styrene-butadiene random copolymer, which serves to enhance the resistance against plasticizers, resulting in achievement of a time course stable adhesive strength in addition to the initial adhesive capability when applied to an air-permeable film, as experienced, for example, in the sanitary napkin shown in Figure 1, wherein the migration of the plasticizer in the leak prevention film (air-permeable film) 2 into the hot melt adhesive layer 4 can be prevented.

### [Advantage of the invention]

As described above, the inventive hot melt adhesive composition utilizes a synthetic rubber (component a) consisting of a block copolymer represented by the general formula (1) shown above, and, in addition, moiety B in the formula (1) is a styrene-butadiene random copolymer. Accordingly, the inventive composition has an excellent resistance against plasticizers. Therefore, when the hot melt adhesive composition is used to form a hot melt adhesive layer on a material containing a plasticizer (such as films and sheets) for example, a time course stability of adhesive strength even after stored for a long period can be obtained. In addition, by using a hydrogenated polymer as the styrene-butadiene random copolymer in moiety B, an excellent heat stability can be obtained as well as the improved resistance against plasticizers as mentioned above.

### [Brief description of the drawings]

### [Figure 1]

Figure 1 shows a sectional view of a sanitary napkin.

The present invention is further described in the examples together with the comparatives shown below.

Prior to embodying the inventive examples, synthetic rubbers a to d listed in Table 1 shown below were provided. Synthetic rubbers a to d are represented by the general formula (2) shown below:

A-B-A (2)

wherein A denotes polystyrene and B denotes a styrene-butadiene random copolymer.

**[Table 1]**

| | Synthetic rubber | | | |
|---|---|---|---|---|
| | a | b | c | d |
| Content of styrene in moiety B (%) | 1 | 15 | 30 | 35 |
| Content of styrene in A+B (%) | 30 | 30 | 40 | 40 |

### [Examples 1 to 9, Comparative 1]

The components were incorporated and admixed as shown below in Tables 2 to 4. After melting while heating, the mixtures were cooled to solidify to yield respective hot melt adhesive compositions.

**[Table 2]**

| (Parts by weight) | | | | |
|---|---|---|---|---|
| | | Example | | |
| | | 1 | 2 | 3 |
| Synthetic rubber | a | 5 | - | - |
| | b | - | 5 | - |
| | c | - | - | 5 |
| Tackifying resin *1 | | 45 | 45 | 45 |
| Plasticizing oil *2 | | 50 | 50 | 50 |

| | | | | |
|---|---|---|---|---|
| *1: Hydrogenated alicyclic petroleum resin | | | | |
| *2: Paraffin-based oil, | | | | |

**[Table 3]**

| (Parts by weight) | | | | |
|---|---|---|---|---|
| | | Example | | |
| | | 4 | 5 | 6 |
| Synthetic rubber | a | 30 | - | - |
| | b | - | 30 | - |
| | c | - | - | 30 |
| Tackifying resin *1 | | 60 | 50 | 40 |
| Plasticizing oil *2 | | 10 | 20 | 30 |

| | | | | |
|---|---|---|---|---|
| *1: Hydrogenated alicyclic petroleum resin | | | | |
| *2: Paraffin-based oil, | | | | |

**[Table 4]**

| (Parts by weight) | | | | | |
|---|---|---|---|---|---|
| | | Example | | | Comparative 1 |
| | | 7 | 8 | 9 | |
| Synthetic rubber | a | 50 | - | - | - |
| | b | - | 50 | - | - |
| | c | - | - | 50 | - |
| | d | - | - | - | 50 |
| Tackifying resin *1 | | 40 | 45 | 30 | 30 |
| Plasticizing oil *2 | | 10 | 5 | 20 | 20 |

| | | | | | |
|---|---|---|---|---|---|
| *1: Hydrogenated alicyclic petroleum resin | | | | | |
| *2: Paraffin-based oil, | | | | | |

### [Examples 10 to 12]

Synthetic rubbers a' to c' in which the moieties of the styrene-butadiene random copolymer in synthetic rubbers a to c, respectively, were hydrogenated were provided. The components were incorporated and admixed as shown below in Table 5. After melting while heating, the mixture was cooled to solidify to yield a hot melt adhesive composition.

**[Table 5]**

| (Parts by weight) | | | | |
|---|---|---|---|---|
| | | Example | | |
| | | 10 | 11 | 12 |
| Synthetic rubber | a' | 40 | - | - |
| | b' | - | 40 | - |
| | c' | - | - | 40 |
| Tackifying resin *1 | | 50 | 40 | 30 |
| Plasticizing oil *2 | | 10 | 20 | 30 |

| | | | | |
|---|---|---|---|---|
| *1: Hydrogenated alicyclic petroleum resin | | | | |
| *2: Paraffin-based oil, | | | | |

### [Comparative 2]

As a synthetic rubber, block copolymer e represented by the general formula (3) shown below:

A-B-A (3)

wherein A denotes polystyrene and B denotes butadiene, was provided. The components were incorporated and admixed as shown below in Table 6. After melting while heating, the mixture was cooled to solidify to yield a hot melt adhesive composition.

**[Table 6]**

| (Parts by weight) | |
|---|---|
| | Comparative 2 |
| Block copolymer e | 50 |
| Tackifying resin *1 | 40 |
| Plasicizing oil, | 10 |

| | |
|---|---|
| *1: Hydrogenated alicyclic petroleum resin *2: Paraffin-based oil | |

The hot melt adhesive compositions of the examples and comparative thus obtained were evaluated for resistance against plasticizers, adhesive strength and heat stability. The results are shown in Tables 7 and 8. The methods of the evaluations are described below.

### [Resistance against plasticizers]

At 20°C, the hot melt adhesive composition applied in the thickness of 50 µm to a polyethylene terephthalate film was adhered to a commercial air-permeable polyethylene film in a area of 25.4 cm x 20 cm to form a test piece. The test piece was allowed to stand at 50°C for 3 days, and then the white color degree was evaluated visually. The results were judged as ⓞ when the area to which the hot melt adhesive composition was applied was similar completely to the color of the air-permeable polyethylene film, ○ when almost similar, Δ when transparent slightly, and × when transparent completely.

### [Peeling strength]

At 20°C, the hot melt adhesive composition applied in the thickness of 50 µm to a polyethylene terephthalate film was adhered to a cotton fabric for shorts in a area of 2.54 cm x 20 cm to form a test piece. The test piece was allowed to stand at 40°C while loaded with 1 kg for 6 hours, and then subjected to the determination of peeling strength at 20°C by using a tensile test machine (in compliance with JIS Z-0237).

### [Heat resistance]

The color tone of the hot melt adhesive composition which had been allowed to stand for 72 hours at 180°C was evaluated visually. The results were judged as ⓞ when the color was colorless or white completely, ○ when almost colorless or white, Δ when colored slightly, and X when colored completely.

**[Table 7]**

| | Example | | | | | | |
|---|---|---|---|---|---|---|---|
| | 1 | 2 | 3 | 4 | 5 | 6 | 7 |
| Resistance against plasticizer | ○ | ○ | ○ | ⓞ | ⓞ | ○ | ⓞ |
| Peeling strength | 110 | 150 | 130 | 220 | 280 | 250 | 180 |
| Heat stability | ○ | ○ | ○ | ○ | ○ | ○ | ○ |

**[Table 8]**

| | Example | | | | | Comparative | |
|---|---|---|---|---|---|---|---|
| | 8 | 9 | 10 | 11 | 12 | 1 | 2 |
| Resistance against plasticizer | ⓞ | ⓞ | ⓞ | ⓞ | ⓞ | × | × |
| Adhesion strength | 220 | 200 | 230 | 250 | 210 | 80 | 50 |
| Heat stability | ○ | ○ | ⓞ | ⓞ | ⓞ | ○ | ○ |

As evident from Tables 7 and 8, the comparatives were poor with regard to the resistance against plasticizers when compared with the examples. All examples exhibited excellent resistance against plasticizers, excellent adhesive strength and excellent heat stability.

## Claims

1. A hot melt adhesive composition comprising as major components:
(a) a synthetic rubber which is a block copolymer represented by the general formula (1):
A-B-A (1)
wherein A denotes polystyrene and B denotes a styrene-butadiene random copolymer, and in which the content of styrene in moiety B in the above formula (1) is 1 to 30% by weight based on the entire block copolymer;
(b) a tackifying resin;and,
(c) a plasticizing oil.

2. A hot melt adhesive composition according to Claim 1 wherein said composition contains, based on the entire composition, component a in an amount from 5 to 50%, component b in an amount from 30 to 70%, and component c in an amount from 50% or less.

3. A hot melt adhesive composition according to Claim 1 or 2 wherein moiety B in component (a) is hydrogenated.

## Patentansprüche

1. Schmelzklebstoffzusammensetzung, die als Hauptbestandteile umfaßt:
(a) einen synthetischen Kautschuk, der ein durch die allgemeine Formel (1) dargestelltes Blockcopolymer ist:
A-B-A (1),
worin A Polystyrol und B ein statistisches Styrol-Butadien-Copolymer bedeutet, und in dem der Gehalt an Styrol in der Komponente B der obigen Formel (1) 1 bis 30 Gew.-%, bezogen auf das gesamte Blockcopolymer, beträgt;
(b) ein klebrigmachendes Harz und
(c) ein plastifizierendes Öl.

2. Schmelzklebstoffzusammensetzung nach Anspruch 1, in der die Zusammensetzung, bezogen auf die gesamte Zusammensetzung, den Bestandteil (a) in einer Menge von 5 bis 50%, den Bestandteil (b) in einer Menge von 30 bis 70% und den Bestandteil (c) in einer Menge von 50% oder weniger enthält.

3. Schmelzklebstoffzusammensetzung nach Anspruch 1 oder 2, in der die Komponente B in dem Bestandteil (a) hydriert ist.

## Revendications

1. Composition adhésive thermofusible, comprenant comme principaux composants :
(a) un caoutchouc synthétique qui est un copolymère séquencé représenté par la formule générale (1) :
A-B-A (1)
dans laquelle A désigne un polystyrène et B désigne un copolymère statistique styrène-butadiène, et dans lequel la teneur en styrène du fragment B dans la formule (1) ci-dessus va de 1 à 30 % en poids sur la base du copolymère séquencé entier ;
(b) une résine à pouvoir collant ; et
(c) une huile plastifiante.

2. Composition adhésive thermofusible suivant la revendication 1, qui contient, sur la base de la composition totale, le composant a en une quantité de 5 à 50 %, le composant b en une quantité de 30 à 70 %, et le composant c en une quantité égale ou inférieure à 50 %.

3. Composition adhésive thermofusible suivant la revendication 1 ou 2, dans laquelle le fragment B dans le composant (a) est hydrogéné.
